# FASCICULE DE BREVET EUROPEEN

(11) **EP 1 478 536 B1**
(45) Date de publication et mention de la délivrance du brevet: **29.08.2012**
(21) Numéro de dépôt: 03732620.4
(22) Date de dépôt: 20.02.2003
(51) Int. Cl.: B60J 7/14

(54) **DISPOSITIF DE COMMANDE DE TOIT ESCAMOTABLE DE VEHICULE POUR UN DEGAGEMENT OPTIMAL AU-DESSUS DE L'HABITACLE**
STEUERUNGSEINRICHTUNG EINES FALTBAREN FAHRZEUGDACHES FÜR EINE OPTIMALE FREILEGUNG OBERHALB DES FAHRGASTRAUMES
CONTROL DEVICE FOR A CONVERTIBLE VEHICLE ROOF WHICH PROVIDES OPTIMUM CLEARANCE ABOVE THE PASSENGER COMPARTMENT

(30) Priorité: 27.02.2002 FR 0202482
(43) Date de publication de la demande: 24.11.2004
(73) Titulaire: Société Européenne de Brevets Automobiles - SEBA, 75011 Paris (FR)
(72) Inventeur: QUEVEAU, Gérard, F-79140 Le Pin (FR); GUILLEZ, Jean-Marc, F-79140 Cirières (FR); QUEVEAU, Paul, F-79140 Montravers (FR)
(74) Mandataire: Novagraaf Technologies
(86) Numéro de dépôt international: PCT/FR2003/000568
(87) Numéro de publication internationale: WO 2003/072383

(56) Documents cités:
- FR-A- 2 808 745
- US-A- 5 979 970
- US-A1- 2001 006 297
- US-A1- 2001 019 213
- US-A1- 2001 040 385

## Description

La présente invention concerne un dispositif pour toit escamotable ou rétractable dans le coffre arrière d'un véhicule.

Un tel toit escamotable permet notamment de transformer un véhicule du type coupé à deux places ou coupé ou berline à quatre places, en un véhicule du type cabriolet.

On connaît des toits escamotables dans le coffre arrière d'un véhicule découvrable comprenant au moins un élément de toit avant, un élément de toit intermédiaire et un élément de toit arrière.

Ces différents éléments sont reliés par des moyens permettant de déplacer les trois éléments entre une position de fermeture dans laquelle ils recouvrent le véhicule et une position de rangement dans laquelle ceux-ci sont rangés dans le coffre arrière.

Dans ce système de toit rigide rétractable, l'élément arrière est monté de façon pivotante selon un axe de pivotement transversal sur la carrosserie du véhicule.

L'élément intermédiaire est monté de façon pivotante entre son extrémité arrière et l'extrémité avant de l'élément arrière.

L'élément avant est monté de façon pivotante entre son extrémité arrière et l'extrémité avant de l'élément intermédiaire.

En position de rangement, l'élément avant se trouve entre l'élément intermédiaire et l'élément arrière, le tout formant un ensemble sensiblement horizontal dans le coffre arrière.

Les galbes des éléments avant et intermédiaire sont alors de sens opposés tandis que le galbe de l'élément avant est dans le même sens que ie galbe de l'élément arrière, leur concavité étant tournée vers le haut.

Dans un véhicule présentant un tel toit, où l'élément avant pivote par rapport à l'élément intermédiaire, il se pose un problème de mouvement de cet élément par rapport au mouvement du reste de l'ensemble du toit rétractable.

De plus, sous les éléments de toit en mouvement, il doit exister un dégagement vertical suffisant afin de ne pas percuter la tête d'un des occupants du véhicule.

Ainsi, à l'homme du métier est connu un dispositif de commande pour toit escamotable de véhicule. Selon le préambule des revendications 1 ou 2, à savoir, comprenant plusieurs éléments arrière, intermédiaire et avant de toit rigides déplaçables entre une position dans laquelle ils sont rangés à l'intérieur du coffre arrière du véhicule, de façon superposée sensiblement horizontalement, l'élément avant étant placé entre l'élément arrière et l'élément intermédiaire, et une position dans laquelle ils recouvrent l'habitacle du véhicule, l'arrière de l'élément arrière étant relié de façon pivotante à la carrosserie selon un premier axe de pivotement transversal, l'arrière de l'élément intermédiaire étant relié de façon pivotante à l'avant de l'élément arrière selon un second axe de pivotement transversal, l'arrière de l'élément avant étant relié de façon pivotante à l'avant de l'élément intermédiaire selon un troisième axe de pivotement transversal, ledit dispositif comprenant des moyens d'entraînement et des moyens de coordination pour coordonner les mouvements de pivotement autour desdits axes.

Un dispositif voisin est décrit dans le document US 2001/006 297. Le but de la présente invention est d'apporter des perfectionnements aux moyens connus, pour commander et guider d'une manière optimale le déplacement des éléments du toit entre la position de fermeture et la position de rangement dans le coffre.

Selon l'invention, les moyens de coordination sont agencés de sorte que le mouvement combiné des moyens de coordination permette une inclinaison plus importante de l'élément intermédiaire quand celui-ci est dans sa position la plus haute.

Ainsi le mouvement de pivotement de l'élément avant selon le troisième axe est non linéaire par rapport au mouvement de pivotement de l'élément arrière selon le premier axe.

Lors de l'escamotage, le dispositif permet donc de surélever l'élément intermédiaire pour que le bord avant de l'élément avant n'empiète pas, sur le volume de l'habitacle.

Par ailleurs, selon l'invention lesdits moyens de coordination comprennent pour cela deux bras articulés à la carrosserie en deux points d'articulation, une première biellette articulée aux deux bras à proximité de l'une de ses extrémités en deux points d'articulation et en un point intermédiaire à l'élément intermédiaire, et une seconde biellette articulée soit à une de ses extrémités à l'autre extrémité de la première biellette et à son autre extrémité à l'élément avant ; soit à l'une de ses extrémités à l'autre extrémité de la première biellette et à son autre extrémité à un levier apte à pivoter autour d'un axe de pivotement de sorte que l'élément avant puisse pivoter autour de l'axe pour venir se ranger contre la face intérieure de l'élément intermédiaire.

Les deux bras peuvent être coudés en direction de l'élément arrière. L'un des deux bras peut être plus long que l'autre.

Les bras coudés permettent un rangement aisé des éléments à l'intérieur du coffre.

D'autres particularités et avantages de l'invention apparaîtront encore dans la description ci-après, description effectuée en référence aux figures annexées dans lesquelles :
- la figure 1 est une vue en coupe longitudinale schématique d'un toit de véhicule selon l'invention en position de fermeture ;
- la figure 2 est une vue en coupe longitudinale schématique du toit selon l'invention en cours d'escamotage ;
- la figure 3 est une vue en coupe longitudinale schématique du toit selon l'invention en position de rangement dans le coffre arrière ;
- la figure 4 est un schéma de principe du mouvement ;
- la figure 5 est une vue en coupe longitudinale d'un autre mode de réalisation d'articulation des éléments intermédiaire 2 et avant 3.

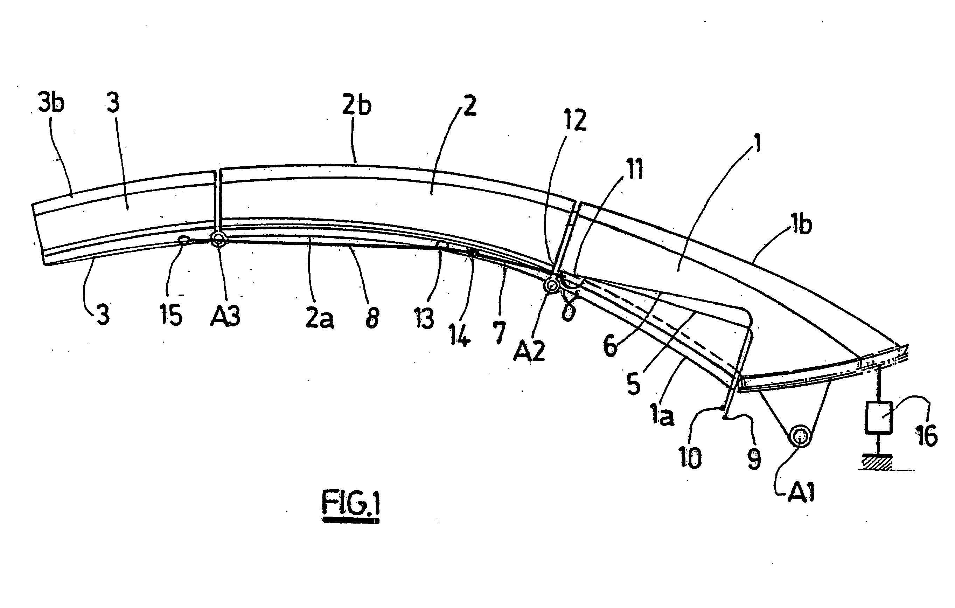

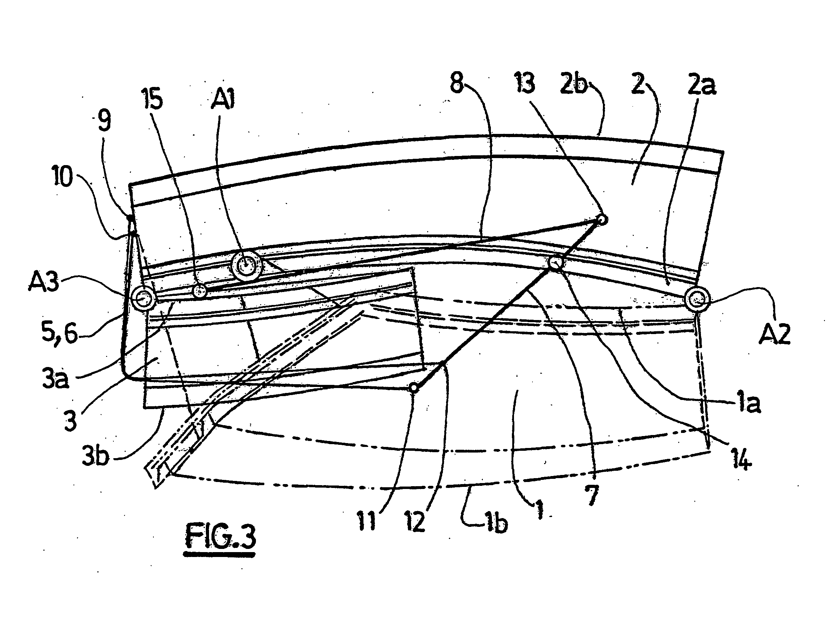

Le toit escamotable représenté sur la figure 1 comprend trois éléments de toit rigides 1, 2, 3 déplaçables entre une position dans laquelle ils recouvrent l'habitacle du véhicule (figure 1) et une position dans laquelle ils sont rangés à l'intérieur du coffre arrière du véhicule (figure 3).

Dans le mode de réalisation représenté d'un toit à trois éléments, l'arrière de l'élément arrière 1 repose contre le coffre arrière du véhicule et l'avant de l'élément avant 3 repose contre l'extrémité supérieure d'un pare-brise.

Chaque élément de toit 1, 2, 3 présente une face intérieure 1 a, 2a, 3a située vers l'habitacle et une face extérieure 1b, 2b, 3b située vers l'extérieur du véhicule.

L'arrière de l'élément arrière 1 est relié de façon pivotante à la carrosserie du véhicule selon un axe de pivotement A1 transversal à la direction longitudinale du véhicule.

L'arrière de l'élément intermédiaire 2 est relié de façon pivotante à l'avant de l'élément arrière 1 selon un axe de pivotement A2 transversal à la direction longitudinale du véhicule. L'axe de pivotement A2 est situé sensiblement au niveau des faces intérieures 1 a, 2a des éléments arrière 1 et intermédiaire 2.

Enfin, l'arrière de l'élément avant 3 est relié de façon pivotante à l'avant de l'élément intermédiaire 2 selon un axe de pivotement A3 transversal à la direction longitudinale du véhicule. L'axe A3 est situé sensiblement au niveau des faces intérieures 2a, 3a des éléments intermédiaire 2 et avant 3.

En référence à la figure 3, en position de rangement, de par la position de l'axe de pivotement A3, les éléments intermédiaire 2 et avant 3 sont superposés l'un contre l'autre le long de leurs faces intérieures 2a, 3a. Les galbes de ces deux éléments sont alors de sens opposé.

L'élément avant 3 est, dans cette position de rangement, intercalé entre les éléments arrière 1 et intermédiaire 2, les galbes des éléments arrière 1 et avant 3 étant de même sens.

En référence aux figures 1, 2, 3, le mécanisme d'escamotage du toit comprend sur chaque flanc de véhicule :
- une paire de bras coudés 5, 6 ;
- une première biellette 7 ;
- une seconde biellette 8 ;
- des points d'articulations 9, 10, 11, 12, 13, 14, 15 entre les éléments précédents 5, 6, 7, 8.

Chaque bras de la paire de bras coudés 5, 6 est articulé à la carrosserie en un point d'articulation 9, 10 et à la première biellette 7 selon un point d'articulation 11, 12.

Le point d'articulation 11 est situé à l'extrémité de la biellette 7.

Le point d'articulation 12 est situé en un point proche de l'extrémité de la biellette 7, la distance entre les points d'articulation 11, 12 et entre les points 9, 10 déterminant la géométrie du quadrilatère 9, 10, 11, 12 et donc la cinématique propre de la biellette 7.

La première biellette 7 est articulée en son extrémité opposée aux points d'articulation 11, 12 à la seconde biellette 8 en un point d'articulation 13.

Cette première biellette 7 est de plus articulée à l'élément de toit intermédiaire 2 en un point d'articulation 14 formant pivot.

La distance entre les points d'articulations 13 et 14 détermine la cinématique propre de l'élément avant 3.
Le point d'articulation 14 est situé sensiblement sur la face intérieure 2a de l'élément intermédiaire 2.

En son extrémité opposée à la première biellette 7, la seconde biellette 8 est articulée à l'arrière de l'élément avant 3 en un point d'articulation 15.

En position de fermeture, les bras 5, 6 et biellettes 7, 8 n'empiètent sensiblement pas sur l'habitacle du véhicule.

L'homme du métier saura choisir les longueurs et positionnements relatifs des différents éléments du dispositif de sorte que ceux-ci soient adaptés au toit et permettent de réaliser l'escamotage dont le principe est expliqué ci-après.

On décrit l'escamotage des éléments de toit 1, 2, 3 dans le coffre arrière du véhicule, le passage de la position de rangement à la position de fermeture se faisant selon un déplacement inverse des éléments de toit.

Le déplacement de l'élément arrière 1 vers le coffre du véhicule est commandé par tout moyen convenable 16 tel qu'un moteur électrique ou hydraulique permettant le pivotement de l'élément arrière 1 autour de son axe de pivotement A1.

Le déplacement de l'élément arrière 1 entraîne un déplacement général de l'ensemble du toit et particulièrement le pivotement de celui-ci autour de l'axe de pivotement A2.

Le déplacement de l'élément intermédiaire 2 est de plus guidé par l'ensemble formé des deux bras 5, 6 et de la première biellette 7 articulée au point d'articulation 13.

De même, le déplacement de l'élément intermédiaire 2 entraîne un déplacement de l'élément avant 3 et le pivotement de celui-ci autour de l'axe de pivotement A3.

Le déplacement de l'élément avant 3 est de plus guidé par la seconde biellette 8.

Ainsi, les trois éléments arrière 1, intermédiaire 2 et avant 3 ont un mouvement simultané et coordonné.

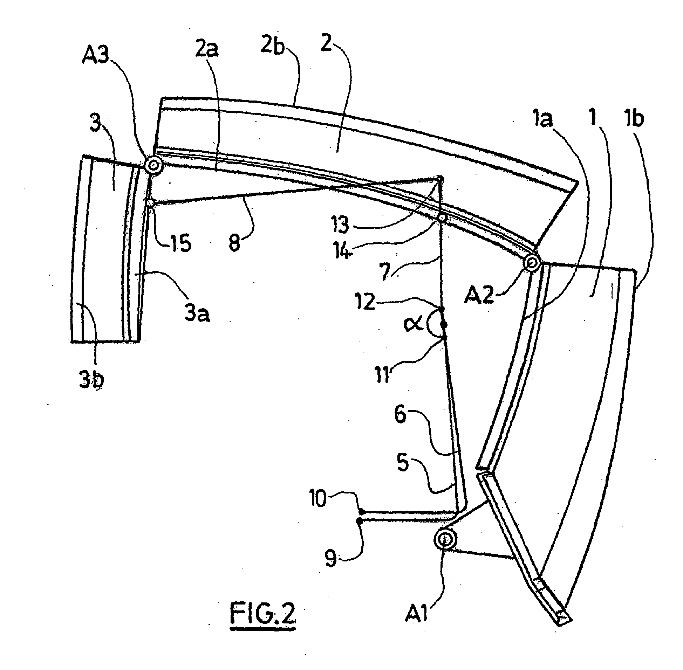

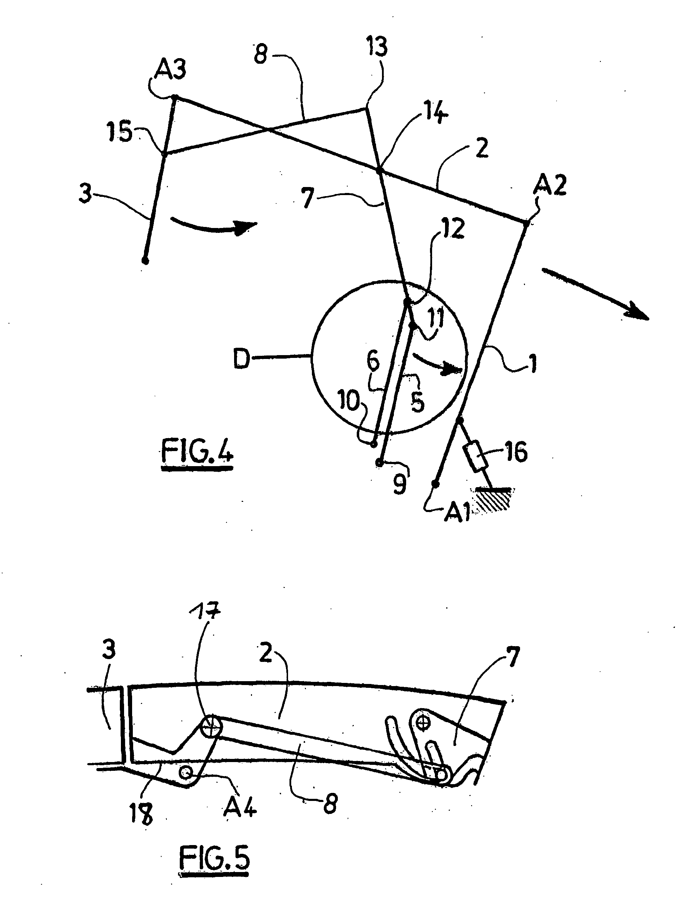

En référence aux figures 2 et 4, lorsque l'élément arrière 1 et l'élément avant 3 sont sensiblement verticaux.

Autour de cette position, l'élément intermédiaire 2 est au plus haut par rapport à l'habitacle de la voiture et offre un dégagement vertical maximal pour le basculement de l'élément avant 3.

Le bras 6 est placé par rapport au bras 5 de telle sorte que le point d'articulation 12 se déplace plus vers l'arrière que le point d'articulation 11.

Ainsi, lorsque l'élément arrière 1 bascule vers l'arrière, la partie de la biellette 7 comprise entre les points d'articulation 11, 14 bascule vers l'avant.

Le mouvement de la biellette 7 entraîne une traction de la seconde biellette 8, elle-même entraînant un rabat de l'élément avant 3 vers l'élément intermédiaire 2.

L'angle α formé par la biellette 7 et les deux paires de bras 5, 6 est sensiblement de 180°, valeur maximale atteinte lors de l'escamotage.

Plus l'angle α a une valeur élevée, plus l'élément intermédiaire 2 peut être élevé par rapport à l'habitacle offrant ainsi un dégagement vertical maximal pour permettre un pivotement de l'élément avant 3 ne gênant pas les passagers du véhicule.

Le mouvement combiné de la biellette 7 par rapport au bras 5 et 6 et le mouvement de l'ensemble composé des bras 5, 6 et de la biellette 7 par rapport au déplacement des éléments arrière 1 et intermédiaire 2 induisent un pivotement progressif de l'élément avant 3 par l'intermédiaire de la biellette 8.

Par la suite, le déplacement des différents éléments 1, 2, 3 se poursuit jusqu'à ce que ceux-ci soient sensiblement superposés horizontalement dans le coffre du véhicule, comme représenté sur la figure 3.

Entre la position de fermeture et la position de rangement, les bras 5, 6 ont effectué une rotation d'environ 180°.

En référence à la figure 5, dans un second mode de réalisation, le basculement de l'élément avant 3 sous l'élément intermédiaire 2 est réalisé par la biellette 8 articulée en un point d'articulation 17 à un levier en L 18.

Le levier 18 est apte à pivoter selon un axe de pivotement A4 situé à l'avant et sous la face intérieure 2a de l'élément intermédiaire 2.

L'ensemble des moyens d'escamotage décrits précédemment sont placés de façon à ce que lors de l'escamotage du toit, la biellette 8 pousse la partie du levier à laquelle elle est articulée.

Le levier 18 pivote autour de son axe A4 et l'élément avant vient se placer sous l'élément intermédiaire.

## Revendications

1. Dispositif de commande pour toit escamotable de véhicule comprenant plusieurs éléments arrière (1), intermédiaire (2) et avant (3) de toit rigides déplaçables entre une position dans laquelle ils sont rangés à l'intérieur du coffre arrière du véhicule, de façon superposée sensiblement horizontalement, l'élément avant (3) étant placé entre l'élément arrière (1) et l'élément intermédiaire (2), et une position dans laquelle ils recouvrent l'habitacle du véhicule, l'arrière de l'élément arrière (1) étant relié de façon pivotante à la carrosserie selon un premier axe de pivotement transversal (A1), l'arrière de l'élément intermédiaire (2) étant relié de façon pivotante à l'avant de l'élément arrière (3) selon un second axe de pivotement transversal (A2), l'arrière de l'élément avant (3) étant relié de façon pivotante à l'avant de l'élément intermédiaire (2) selon un troisième axe de pivotement transversal (A3), ledit dispositif comprenant des moyens d'entraînement (16) et des moyens de coordination (5, 6, 7, 8) pour coordonner les mouvements de pivotement autour desdits axes (A1, A2, A3), **caractérisé en ce que** lesdits moyens de coordination (5, 6, 7, 8) comprennent deux bras (5, 6) articulés à la carrosserie en deux points d'articulation (9, 10), une première biellette (7) articulée aux deux bras (5, 6) à proximité de l'une de ses extrémités en deux points d'articulation (11, 12) et en un point intermédiaire (14) à l'élément intermédiaire (2), et une seconde biellette (8) articulée à une de ses extrémités à l'autre extrémité de la première biellette (7) et à son autre extrémité à l'élément avant (3), lesdits moyens de coordination (5, 6, 7, 8) étant agencés de sorte que le mouvement combiné des moyens de coordination (5, 6, 7) permette une inclinaison plus importante de l'élément intermédiaire (2) quand celui-ci est dans sa position la plus haute.

2. Dispositif de commande pour toit escamotable de véhicule comprenant plusieurs éléments arrière (1), intermédiaire (2) et avant (3) de toit rigides déplaçables entre une position dans laquelle ils sont rangés à l'intérieur du coffre arrière du véhicule, de façon superposée sensiblement horizontalement, l'élément avant (3) étant placé entre l'élément arrière (1) et l'élément intermédiaire (2), et une position dans laquelle ils recouvrent l'habitacle du véhicule, l'arrière de l'élément arrière (1) étant relié de façon pivotante à la carrosserie selon un premier axe de pivotement transversal (A1), l'arrière de l'élément intermédiaire (2) étant relié de façon pivotante à l'avant de l'élément arrière (3) selon un second axe de pivotement transversal (A2), l'arrière de l'élément avant (3) étant relié de façon pivotante à l'avant de l'élément intermédiaire (2) selon un troisième axe de pivotement transversal (A3), ledit dispositif comprenant des moyens d'entraînement (16) et des moyens de coordination (5, 6, 7, 8) pour coordonner les mouvements de pivotement autour desdits axes (A1, A2, A3), **caractérisé en ce que** lesdits moyens de coordination (5, 6, 7, 8) comprennent deux bras (5, 6) articulés à la carrosserie en deux points d'articulation (9, 10), une première biellette (7) articulée aux deux bras (5, 6) à proximité de l'une de ses extrémités en deux points d'articulation (11, 12) et en un point intermédiaire (14) à l'élément intermédiaire (2), et une seconde biellette (8) articulée à une de ses extrémités à l'autre extrémité de la première biellette (7) et à son autre extrémité à un levier (18) apte à pivoter autour d'un axe de pivotement (A4) de sorte que l'élément avant (3) puisse pivoter autour de cet axe de pivotement (A4) pour venir se ranger contre la face intérieure de l'élément intermédiaire (2), lesdits moyens de coordination (5, 6, 7, 8) étant agencés de sorte que le mouvement combiné des moyens de coordination (5, 6, 7) permette une inclinaison plus importante de l'élément intermédiaire (2) quand celui-ci est dans sa position la plus haute.

3. Dispositif selon l'une des revendications 1 ou 2, **caractérisé en ce que** les deux bras (5, 6) articulés à la carrosserie sont coudés en direction de l'élément arrière (1).

## Claims

1. Control device for a retractable roof of a vehicle comprising several rear (1), intermediary (2) and front (3) rigid roof elements which can move between a position in which they are stowed in the interior of the rear boot of the vehicle, in a substantially horizontal superimposed manner, the front element (3) being placed between the rear element (1) and the intermediary element (2), and a position in which they cover the passenger compartment of the vehicle, the rear of the rear element (1) being connected in a pivoting manner to the car body along a first transverse pivot axis (A1), the rear of the intermediary element (2) being connected in a pivoting manner to the front of the rear element (1) along a second transverse pivot axis (A2), the rear of the front element (3) being connected in a pivoting manner to the front of the intermediary element (2) along a third transverse pivot axis (A3), said device comprising driving means (16) and coordination means (5, 6, 7, 8) to coordinate the pivoting movements around said axes (A1, A2, A3), **characterised in that** said coordination means (5, 6, 7, 8) comprise two arms (5, 6) hinged to the car body in two hinging points (9, 10), a first rod (7) hinged to the two arms (5, 6) near one of its ends in two hinging points (11, 12) and in one intermediary point (14) to the intermediary element (2), and a second rod (8) hinged by one of its ends to the other end of the first rod (7) and by its other end to the front element (3), said coordination means (5, 6, 7, 8) being arranged in such a way that the combined movement of the coordination means (5, 6, 7) enables a more significant inclination of the intermediary element (2) when the latter is in its most elevated position.

2. Control device for a retractable roof of a vehicle comprising several rear (1), intermediary (2) and front (3) rigid roof elements which can move between a position in which they are stowed in the interior of the rear boot of the vehicle, in a substantially horizontal superimposed manner, the front element (3) being placed between the rear element (1) and the intermediary element (2), and a position in which they cover the passenger compartment of the vehicle, the rear of the rear element (1) being connected in a pivoting manner to the car body along a first transverse pivot axis (A1), the rear of the intermediary element (2) being connected in a pivoting manner to the front of the rear element (1) along a second transverse pivot axis (A2), the rear of the front element (3) being connected in a pivoting manner to the front of the intermediary element (2) along a third transverse pivot axis (A3), said device comprising driving means (16) and coordination means (5, 6, 7, 8) to coordinate the pivoting movement around said axes (Al, A2, A3), **characterised in that** said coordination means (5, 6, 7, 8) comprise two arms (5,6) hinged to the car body in two hinging points (9, 10), a first rod (7) hinged to the two arms (5, 6) near one of its ends in two hinging points (11, 12) and in one intermediary point (14) to the intermediary element (2), and a second rod (8) hinged by one of its ends to the other end of the first rod (7) and by its other end to a lever (18) suitable for pivoting around a pivot axis (A4) in such a manner that the front element (3) can pivot around this pivot axis (A4) to come and place itself against the inner side of the intermediary element (2), said coordination means (5, 6, 7, 8) being arranged so that the combined movement of the coordination methods (5, 6, 7) enables a more significant inclination of the intermediary element (2) when the latter is in its most elevated position.

3. Device according to one of claims 1 or 2, **characterised in that** the two arms (5, 6) hinged to the car body are bent towards the rear element (1).

## Patentansprüche

1. Steuervorrichtung für ein faltbares Fahrzeugdach umfassend mehrere hintere (1), mittlere (2) und vordere (3) starre Dachelemente beweglich zwischen einer Position, in der sie im Inneren des Heckkofferraums des Fahrzeugs in einer im Wesentlichen horizontalen, übereinandergelagerten Position verstaut sind, wobei das vordere Element (3) zwischen dem hinteren (1) und dem mittleren Element (2) platziert ist, und einer Position, in welcher sie den Fahrgastraum abdecken, wobei der hintere Teil des hinteren Elements (1) schwenkbar mit der Karosserie entlang einer ersten Querschwenkachse (A1) verbunden ist, wobei der hintere Teil des mittleren Elements (2) schwenkbar mit dem vorderen Teil des hinteren Elements (1) entlang einer zweiten Querschwenkachse (A2) verbunden ist, wobei der hintere Teil des vorderen Elements (3) schwenkbar mit dem vorderen Teil des mittleren Elements (2) entlang einer dritten Querschwenkachse (A3) verbunden ist, wobei besagte Vorrichtung Antriebsmittel (16) und Koordinationsmittel (5, 6, 7, 8) umfasst, um die Schwenkbewegungen um besagte Achsen (A1, A2, A3) zu koordinieren, **dadurch gekennzeichnet, dass** die Koordinationsmittel (5,6,7,8) Folgende umfassen: zwei gelenkig an der Karosserie an zwei Gelenkpunkten (9, 10) befestigte Arme (5, 6), eine erste Stange (7), die an den beiden Armen (5, 6) in der Nähe einer ihrer beiden Enden mit zwei Gelenkpunkten (11,12) und an einem mittleren Punkt (14) mit dem mittleren Element (2) gelenkig verbunden ist, und eine zweite Stange (8), die an einem ihrer Enden mit dem anderen Ende der ersten Stange (7) und mit ihrem anderen Ende mit dem vorderen Element (3) gelenkig verbunden ist, wobei besagte Koordinationsmittel (5,6,7,8) in solch einer Weise angebracht sind, dass die kombinierte Bewegung der Koordinationsmittel (5,6,7) eine stärkere Neigung des mittleren Elements (2) ermöglicht, wenn sich dieses in seiner höchsten Position befindet.

2. Steuervorrichtung für ein faltbares Fahrzeugdach umfassend mehrere hintere (1), mehrere hintere (1), mittlere (2) und vordere (3) starre Dachelemente beweglich zwischen einer Position, in der sie im Inneren des Heckkofferraums des Fahrzeugs in einer im Wesentlichen horizontalen, übereinandergelagerten Position verstaut sind, wobei das vordere Element (3) zwischen dem hinteren (1) und dem mittleren Element (2) platziert ist, und einer Position, in welcher sie den Fahrgastraum abdecken, wobei der hintere Teil des hinteren Elements (1) schwenkbar mit der Karosserie entlang einer ersten Querschwenkachse (A1) verbunden ist, wobei der hintere Teil des mittleren Elements (2) schwenkbar mit dem vorderen Teil des hinteren Elements (1) entlang einer zweiten Querschwenkachse (A2) verbunden ist, wobei der hintere Teil des vorderen Elements (3) schwenkbar mit dem vorderen Teil des mittleren Elements (2) entlang einer dritten Querschwenkachse (A3) verbunden ist, wobei besagte Vorrichtung Antriebsmittel (16) und Koordinationsmittel (5,6,7,8) umfasst, um die Schwenkbewegungen um besagte Achsen (A1, A2, A3) zu koordinieren, **dadurch gekennzeichnet, dass** die Koordinationsmittel (5,6,7,8) Folgende umfassen : zwei gelenkig an der Karosserie an zwei Gelenkpunkten (9, 10) befestigte Arme (5, 6), eine erste Stange (7), die an den beiden Armen (5, 6) in der Nähe einer der beiden Enden mit zwei Gelenkpunkten (11,12) und an einem mittleren Punkt (14) mit dem mittleren Element (2) gelenkig verbunden ist, und eine zweite Stange (8), die an einem ihrer Enden mit dem anderen Ende der ersten Stange (7) gelenkig verbunden ist und mit ihrem anderen Ende mit einem um eine Schwenkachse (A4) derart schwenkbaren Hebel (18) verbunden ist, dass das vordere Element (3) um diese Schwenkachse (A4) geschwenkt werden kann, so dass es sich selbst gegen die innere Seite des mittleren Elements (2) platziert, wobei besagte Koordinationsmittel (5,6,7,8) in solch einer Weise angebracht sind, dass die kombinierte Bewegung der Koordinationsmittel (5,6,7) eine stärkere Neigung des mittleren Element (2) ermöglicht, wenn sich dieses in seiner höchsten Position befindet.

3. Vorrichtung nach Anspruch 1 oder 2, **dadurch gekennzeichnet, dass** die beiden gelenkig an der Karosserie befestigten Arme (5, 6) in Richtung des hinteren Elements (1) gebogen sind.
